# EUROPEAN PATENT APPLICATION

(11) **EP 1 429 318 A1**
(43) Date of publication of application: **16.06.2004**
(21) Application number: 02765549.7
(22) Date of filing: 13.09.2002
(51) Int. Cl.: G11B 7/0045, G11B 7/24

(54) **RECORDING MEDIUM RECORDING METHOD AND RECORDING MEDIUM**

(30) Priority: 18.09.2001 JP 2001283701
(71) Applicant: Sony Corporation, Tokyo 141-0001 (JP)
(72) Inventor: KUROKAWA, Kotaro, c/o SONY CORPORATION, Tokyo 141-0001 (JP)
(74) Representative: Müller, Frithjof E., Dipl.-Ing.
(86) International application number: PCT/JP2002/009459
(87) International publication number: WO 2003/025918

(57) **Abstract**

The present invention relates to a recording method for a recording medium having multi-recording layers. When an information signal is recorded on the recording medium which has layers including a light transmission protective layer (6), a first recording layer (5) on which laser beam incident from the light transmission protective layer (6) side is scanned along first guide grooves (51), and a second recording layer (3) on which laser beam incident from the light transmission protective layer (6) is scanned along second guide grooves (21), the information signal is recorded on either the guide grooves or areas between the guide grooves of the recording layer of the first recording layer (5) and the second recording layer (3) located near the light transmission protective layer (6).

## Description

### Technical Field

The present invention relates to a method for recording an information signal on a recording medium having multi-recording layers and a recording medium used for this recording method.

### Background Art

With the progress of information communication devices, optical discs that can treat a larger quantity of information, that is, optical discs that can record or store more data have been required.

As such optical discs which can record a larger quantity of information, a DVD (Digital Versatile Disc) have been provided as what is called single sided dual layer type discs in which information is read out from a single surface as one side surface of the optical disc. The single sided dual layer type disc is formed in such a manner that two recording layers are laminated in parallel with each other on one disc board. The first recording layer is located at a position substantially 0.6 mm separate from the light incident surface of the disc board. The second recording layer is located at a position substantially 1.2 mm separate from the light incident surface of the disc board. An information signal is recorded on either of the two recording layers provided on the single sided dual layer type disc, or the recorded information signal is reproduced by converging laser beam as light beam from the light incident surface of the disc board on the first layer or the second layer.

In the optical disc used as the recording medium of an information processing equipment of the information communication device or the like, a rewritable or write-once single sided dual layer type optical disc has been requested. In this optical disc, the information signal can be rewritten or written once on both the two recording layers and the optical disc of this type has been progressively developed. As such optical discs, various kinds of single sided dual layer type optical discs using a phase-change recording material for the recording layers have been proposed.

In the phase-change type optical disc that uses the phase-change recording material as an optical recording material such as the single sided dual layer type optical disc, laser beam is applied to the recording layers. Thus, the phase-change recording material is changed between a crystalline state and an amorphous state to record the information signal and read and reproduce the recorded information signal from the optical disc by employing the difference in reflectance between the crystalline state and the amorphous state.

In the above-described single sided dual layer type optical disc, the phase-change recording material is used for the first recording layer located in the light incident side. In this case, it is known that the light transmittance of the first recording layer is partly different depending on the crystalline part and the amorphous part of the phase-change material forming the first recording layer. The recording material of the first recording layer may not be made of the phase-change recording material, and, for instance, an organic dye material used for a CD-R (Compact Disc-Recordable), a DVD-R (Digital Versatile Disc-Recordable) as write-once type optical discs capable of being written only once may be employed. Even in this case, the transmittance is different between a part that is irradiated with laser beam and a part that is not irradiated with laser beam. Therefore, when the organic dye material is used for the first recording layer, the same problem as that when the phase-change material is used as the recording material arises.

In the second recording layer laminated on the first recording layer through an optically transparent intermediate layer, when only the second recording layer is provided as a simple substance without providing the first recording layer, the recording power of recording light optimum for the second recording layer is fixed. In the above-described single sided dual layer type optical disc, the optimum value of the recording power of the recording light necessary for recording the information signal on the second recording layer changes. The optimum value of the recording power of the recording light changes between when information is not recorded on the first recording layer and when the information is already recorded on the first recording layer. Since the recording light passes through the first recording layer and then is incident on the second recording layer through the transparent intermediate layer, the above-described phenomenon arises.

When information is recorded on the second recording layer, whether or not the information signal is recorded on the first recording layer is detected by any method. Thus, in case the recording power of laser beam as the recording light applied on the second recording layer can be corrected in a real time, the problem can be solved. However, under existing circumstances, a method for detecting whether or not the information signal is recorded on the first recording signal is detected while the information signal is recorded on the second recording layer is not established. Even if such a detecting method can be realized, a recording and reproducing device will become expensive. Therefore, this method may be a solving method desirably-avoided as much as possible.

When the information signal recorded on the second recording layer is read out, the quantity of light returning from the second recording layer is different between a case in which laser beam as reproducing light passes through the first recording layer on which the information signal is already recorded to read the formation signal recorded on the second recording layer and a case in which the laser beam passes through the first recording layer under a state in which the information signal is not been recorded yet to read the information signal recorded on the second recording layer. Accordingly, a circuit for correcting the change of the quantity of return light is required in a circuit system for detecting returning light and performing a signal processing. Especially, upon reading the information recorded on the second recording layer, the laser beam as the reproducing light traverses the boundary of a changed part as a result of applying the laser beam on the first recording layer and an unchanged part, for instance, the boundary of the crystalline part and the amorphous part in the case of the above-described phase change material. At this time, the quantity of light returning from the second recording layer in the vicinity of this boundary area is suddenly changed. Consequently, a high performance is required for the signal processing circuit and a recording and reproducing device using such a signal processing circuit is expensive.

### Disclosure of the Invention

It is an object of the present invention to provide a new recording method for a recording medium and a recording medium used for this recording method which can solve the problems of the above-described conventional recording medium and the method for recording an information signal using the recording medium.

It is another object of the present invention to provide a recording method for a recording medium and a recording medium used for this recording method in which, when an information signal is recorded on a plurality of recording layers, the change of light transmittance before and after the information signal is recorded on the first recording layer hardly affects the recording of the information signal on the second recording layer or the reproducing of the recorded information signal so that the information signal can be recorded.

It is a still another object of the present invention to provide a recording method for a recording medium and a recording medium used for this recording method which can provide an inexpensive recording and/or reproducing device by suppressing the high cost thereof.

The present invention proposed to achieve the above-described objects relates to a recording method for a recording medium. When an information signal is recorded on a recording medium including as layers, a light transmission protective layer, a first recording layer on which laser beam incident from the light transmission protective layer is scanned along first guide grooves and a second recording layer on which laser beam incident from the light transmission protective layer is scanned along second guide grooves, the information signal is recorded on either the guide-grooves or areas between the guide grooves in the recording layer of the first recording layer and the second recording layer located near the light transmission protective layer.

A recording medium used for the recording method for a recording medium according to the present invention comprises a light transmission protective layer, a first recording layer provided in one surface side of the light transmission protective layer so as to form a layer relative to the light transmission protective layer and irradiated with laser beam incident through the light transmission protective layer along first guide grooves and a second recording layer provided as a layer relative to the first recording layer and irradiated with the laser beam incident through the light transmission protective layer along second guide grooves. An information signal is recorded on either the guide grooves or areas between the guide grooves of the recording layer of the first recording layer and the second recording layer located near the light transmission protective layer.

Still other objects of the present invention and specific advantages obtained by the present invention will be more apparent from the description of embodiments with reference to the drawings.

### Brief Description of the Drawings

Fig. 1 is a sectional view showing a multi-layer optical disc having a plurality of recording layers according to the present invention.
Fig. 2 is a perspective view showing guide grooves provided on the first recording layer of the multi-layer optical disc.
Fig. 3 is a perspective view showing the schematic configuration of the guide grooves provided on the first recording layer after a signal is recorded on the optical disc by a groove recording.
Fig. 4 is a perspective view showing the schematic configuration of guide grooves of a first recording layer after an information signal is recorded on a conventional multi-layer optical disc by a land groove recording.
Fig. 5 is a sectional view showing the structure of layers in the vicinity of the first recording layer in the multi-layer optical disc when laser beam having the wavelength of about 650 nm is used as recording and reproducing light according to the present invention.
Fig. 6 is a sectional view showing the structure of layers in the vicinity of the first recording layer in the multi-layer optical disc when laser beam having the wavelength of about 400 nm is used as recording and reproducing light according to the present invention.

### Best Mode for Carrying Out the Invention

Now, an example in which the present invention is applied to an optical disc will be described below in detail.

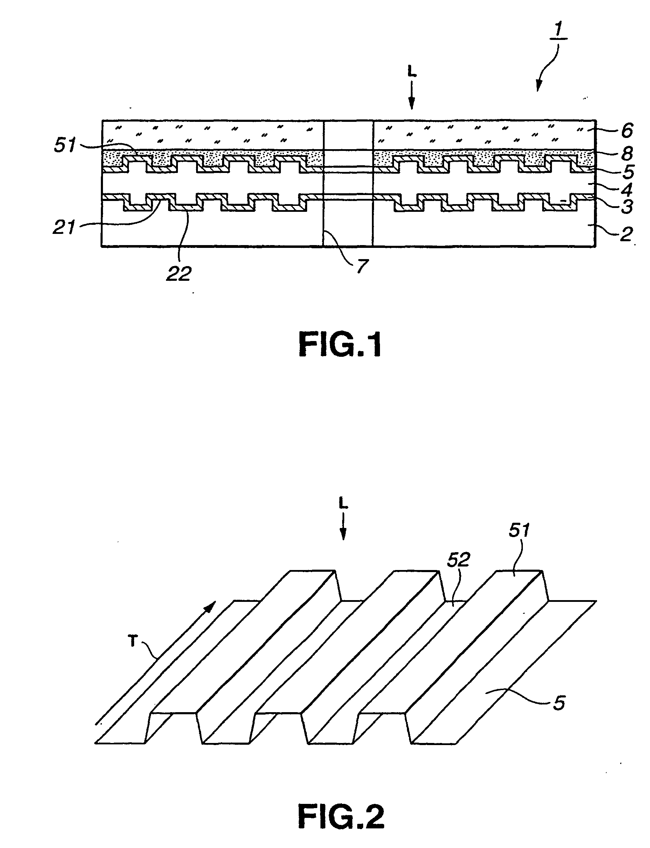

Fig. 1 shows a section of an optical disc 1 as an embodiment of the present invention. The optical disc 1 is what is called a single sided dual layer optical disc in which a recording layer is formed in two layers.

As shown in Fig. 1, the optical disc 1 comprises a support board 2, a second recording layer 3, an intermediate layer 4, a first recording layer 5, a light transmission layer 8 and a light transmission protective layer 6.

The support board 2 is formed in the shape of a disc with the thickness of, for instance, 0.3 to 1.2 mm by using a synthetic resin such as an acrylic resin, polycarbonate, etc. On one surface of the support board 2, concentric or spiral guide grooves 21 are formed. The second recording layer 3 is formed and stuck onto a surface on which the guide grooves 21 are formed so as to cover this surface by using a thin film forming technique such as sputtering, deposition, etc.

On the second recording layer 3, the intermediate layer 4 is formed with the thickness of, for instance, 10 to 60 m, so as to cover all the surface of the second recording layer 3. The intermediate layer 4 is formed of ultraviolet curing resin. On one surface of the intermediate layer 4, concentric or spiral guide grooves 51 are formed. For instance, the ultraviolet curing resin is applied to the support board 2 covered with the second recording layer 3. A stamper is allowed to come into close contact with the second recording layer 3 and then ultraviolet ray is applied to the second recording layer 3 to cure the ultraviolet curing resin. After that, the stamper is peeled off so that the intermediate layer 4 having the guide grooves 51 can be formed.

The first recording layer 5 is formed and stuck onto the surface on which the guide grooves 51 of the intermediate layer 4 are formed by a method such as sputtering, deposition, etc. so as to cover this surface. On the first recording layer 5, the light transmission protective layer 6 is provided through the light transmission layer 8. The light transmission layer 8 is made of a ultraviolet curing resin. The light transmission protective layer 6 is formed on a flat plate with the thickness of, for instance, 90 m. Recording or reproducing laser beam is incident on the first recording layer 5 and the second recording layer 3 through the light transmission protective layer 6 and the light transmission layer 8.

As described above, in the optical disc 1, the first recording layer 5 and the second recording layer 3 are laminated so as to be parallel to each other through the intermediate layer 4 from the incident surface side of the laser beam L.

As shown in Fig. 1, the optical disc 1 is provided with a center hole 7 which is used to perform a centering or chucking operation to a disc rotating mechanism when the optical disc 1 is mounted on the disc rotating mechanism of a recording and/or reproducing device.

Although the above description shows that the support board 2 is made of the synthetic resin such as the acrylic resin, polycarbonate, etc., the present invention is not limited to the synthetic resin and the support board 2 may be made of glass. When the support board 2 is made of glass, guide grooves are formed on one surface of a ultraviolet curing resin layer on the support board 2 made of glass by a 2P (Photo Polymerization) method.

The first recording layer 5 and the second recording layer 3 are made of an optical recording material on which an information signal can be rewritten or can be written once. The first recording layer 5 is a composite layer composed of, for instance, a phase-change recording material layer, a dielectric material layer, a crystallization accelerating layer or the like, as described below. The second recording layer 3 is a composite layer composed of, for instance, a phase-change recording material layer, a metallic reflecting layer, a dielectric material layer, a crystallization accelerating layer, etc. As the materials of the phase-change recording material layer forming the first recording layer 5 and the second recording layer 3, for instance, Sb, Te, In, Ag, Ge, etc. are used and compounds produced by compounding two or more kinds of these materials are used.

Fig. 2 shows a schematic structure of the first recording layer 5 according to this embodiment. The guide grooves 51 are formed to be protruding parts seen from the light incident side of the optical disc 1. A part between the guide groove 51 and the guide groove 51 is called a land 52. The laser beam L incident from the light transmission protective layer 6 of the optical disc 1 is scanned in the direction shown by an arrow mark T in Fig. 2 along the guide grooves 51. As a result, information signals are recorded on the guide grooves 51 and/or the lands 52 of the optical disc 1 by the laser beam L incident from the light transmission protective layer 6 side. In the optical disc 1, address data necessary for recording the information signals is recorded by extending the guide grooves 51 in the radial direction of the optical disc 1 in a zigzag manner. The address data can be obtained from signals detecting light returning from the guide grooves 51.

As the laser beam used for recording and reproducing the optical disc 1, violet blue laser with the wavelength of about 400 nm or red laser with the wavelength of about 650 nm is employed. The number of apertures (NA) of an objective lens used for converging the laser beam on the first recording layer 5 or the second recording layer 3 is approximately 0.85. The guide grooves 21 formed on the support board 2 which are coated with the second recording layer 3 are likewise formed to be protruding parts relative to the incident surface of the laser beam L as shown in Fig. 1. A part between the guide groove 21 and the guide groove 21 is called a land 22.

In order to record the information signals on the optical disc 1, an initialization that the phase-change material layers forming the first recording layer 5 and the second recording layer 3 are brought into initial states upon forming films is carried out. That is, the first and second recording layers 5 and 3 are respectively in amorphous states when they are shipped from a factory. Accordingly, all the surfaces of the phase-change material layers forming the first and second recording layers 5 and 3 are respectively irradiated with the laser beam or other method to raise the temperature to crystallizing temperature or higher. Then, the phase-change recording material layers are relatively slowly cooled. Thus, all the surfaces of the phase-change recording material layers are phase-changed from amorphous states to crystalline states to initialize the phase-change recording material layers.

Under a state that the phase-change recording material layers forming the first and second recording layers 5 and 3 are initialized, the phase-change recording material layers are irradiated with the laser beam having an output level necessary for recording. Thus, the phase-change recording material layers are heated and melted in areas on which the laser beam is converged. The optical disc 1 is rotated so that the laser beam is moved relative to the first recording layer 5 or the second recording layer 3 to quickly cool the phase-change recording material. Accordingly, a phase-change from a crystalline state to an amorphous state is generated in the phase-change recording material layer to form on parts on which the laser beam is converged recording marks showing that a light reflectance is changed. When recording marks are formed on the second recording layer 3, after the laser beam passes through the first recording layer 5, the laser beam is applied to the phase-change recording material layer forming the second recording layer 3. The laser beam that has been converged on the first recording layer 5 can be converged on the second recording layer 3. At this time, the bias value of an actuator for driving, for instance, an objective lens in the direction parallel to its optical axis, that is, at least a focusing direction is changed to offset the objective lens in the focusing direction.

In the optical disc 1 according to the present invention, an information signal recorded on the first recording layer 5 or the second recording layer 3 of the optical disc 1 is reproduced in such a way as described below. The laser beam having an output level lower than that upon recording is applied to the phase-change recording material layers of the first and second recording layers 5 and 3. Thus, a difference in light reflectance between an area in an amorphous state as a recording mark of the laser beam reflected by the first recording layer 5 or the second recording layer 3 and a crystalline area in the periphery thereof is detected to form a reproducing signal. When the information signal recorded on the phase-change recording material layer of the second recording layer 3 is reproduced, after laser beam as reproducing light passes through the first recording layer 5, the laser beam is applied to the phase-change recording material layer forming the second recording layer 3. The laser beam reflected by the second recording layer 3, that is, returning light also passes through the first recording layer 5 and is received and detected by a photodetector of an optical head of a recording and/or reproducing device. The light returning from the second recording layer 3 passes through the first recording layer 5 two times. Thus, since a signal level obtained as a result of detecting the returning light is low, the decrease of the signal level is corrected by a signal processing circuit part of the recording and/or reproducing device side.

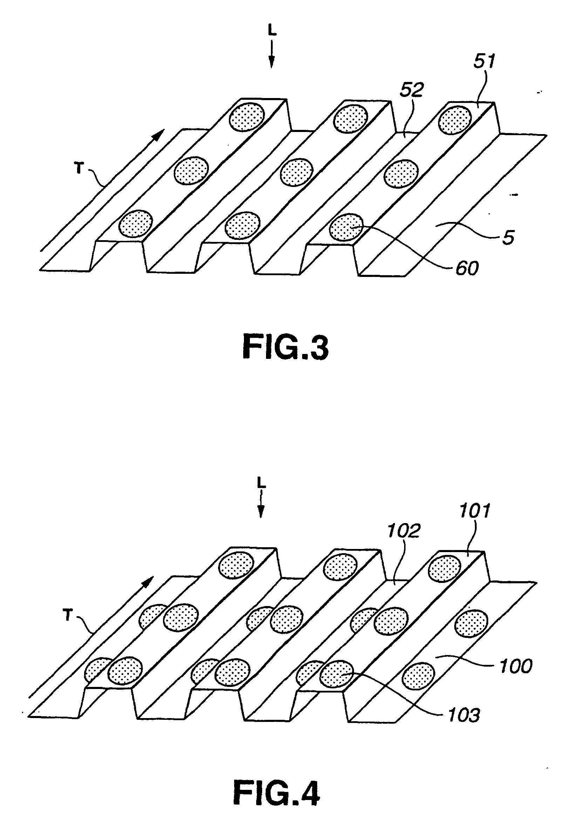

Fig. 3 shows a state after information signals are recorded on the first recording layer 5 of the optical disc 1 to which the present invention is applied. On the first recording layer 5 of the optical disc 1, what is called a groove recording system that the information signals are recorded only in the guide grooves 51 is employed. That is, recording marks 60 showing that the information signals as amorphous areas are recorded are formed only on the guide grooves 51. For comparison, Fig. 4 shows a schematic view of a first recording layer 100 showing a state after information signals are recorded as a comparative example. The comparative example shown in Fig. 4 employs a recording system called a land groove recording that information signals are recorded on both the guide grooves 101 and the lands 102 of the first recording layer 100. That is, recording marks 103 as amorphous areas in which the information signals are recorded are formed on both the grooves 101 and the lands 102.

As apparently understood from Fig. 3, in the optical disc 1 of this embodiment, the information signals are recorded only on the guide grooves 51 of the first recording layer 5. In this case, when the information signals are completely recorded on all the areas of the guide grooves 51, the ratio crystalline areas to amorphous areas as the recording marks 60 is almost 3 : 1 upon viewing the first recording layer 5 as a whole. It is to be understood that the ratio of 3 : 1 may be changed according to a modulation system when information is recorded. On the other hand, as apparently understood from Fig. 4, the information signals are completely recorded on the guide grooves 101 and the lands 102 of the first recording layer 100 by the land groove recording method as the comparative example. In this case, the ratio crystalline areas to amorphous areas as the recording marks 103 is almost 1: 2 upon viewing the first recording layer 100 as a whole.

At this time, in the phase-change recording material layer forming the first recording layer 5, all the phase-change recording material layer is in a crystalline state by the above-described initialization. Accordingly, areas ofthe guide grooves 51 in which the information signals are not recorded and the lands 52 form crystalline areas.

Therefore, in this embodiment, when the information is completely recorded on the guide grooves 51 of the first recording layer 5, the ratio the crystalline areas to the amorphous areas is 3 :1. As compared therewith, when all the information is recorded on both the guide grooves 101 and the lands 102 by the land groove recording system as the comparative example, the ratio the crystalline areas to the amorphous areas is 1:1. Accordingly, this embodiment, that is, the structure shown in Fig. 3 has the ratio the amorphous areas to the crystalline areas smaller than that of the structure shown in Fig. 4. Consequently, a change in light transmittance of the first recording layer 5, that is, the phase-change recording material layer forming the first recording layer 5 can be decreased before and after the information signals are recorded on the phase-change recording material layer of the first recording layer 5. All the surface of the first recording layer 5 forms the crystalline area under a state that the information signals are not recorded. Accordingly, in this embodiment, the influence due to the change in light transmittance generated by recording the information in the phase-change recording material layer of the first recording layer 5 on the recording or reproducing of the information signals on the second recording layer 3 can be reduced. In the single sided dual layer type optical disc 1 according to the present embodiment, the information signals can be recorded on or reproduced from the second recording layer 3 in a stable manner.

The information signals may be recorded on the second recording layer 3 by the groove recording system likewise the first recording layer 5 or by the land groove recording system as shown in Fig. 4. A reason why the land groove recording system may be used is that the second recording layer 3 is located in the interior side of the first recording layer 5 viewing from the incident surface of the laser beam L. Thus, the recording system of the second recording layer 3 does not affect the recording or reproducing of the information signals of the first recording layer 5.

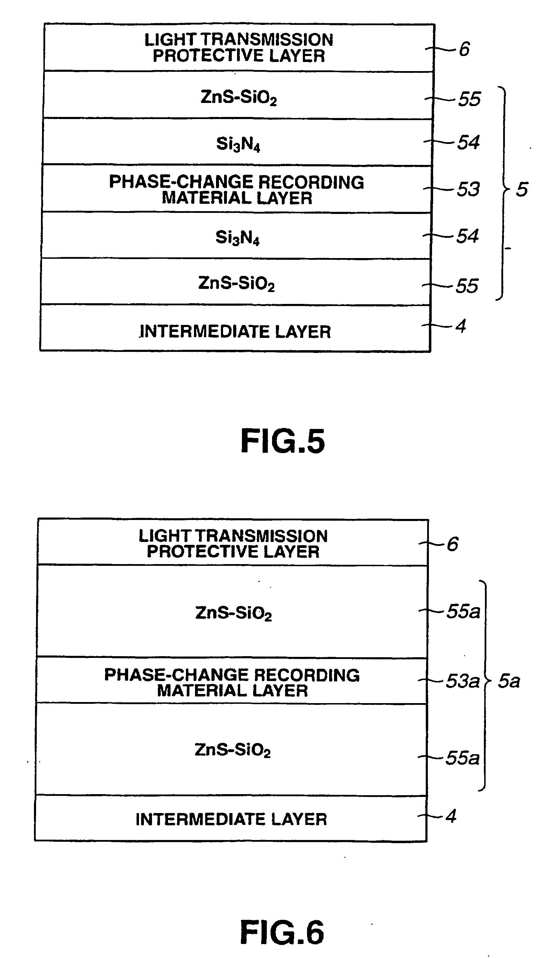

Fig. 5 shows an example of a layer structural of the first recording layer 5 when the laser beam having the wavelength of about 650 nm is used as recording and reproducing laser beam. As described above, the first recording layer 5 comprises the phase-change recording material layer 53, the crystallization accelerating layers 54 and the dielectric material layers 55. As the phase-change recording material layer 53, a phase-change recording material having, for instance, a ratio of Ge : Sb : Te = 2 : 2 : 5 (atomic ratio) is used. The reflectance and the light transmittance of the first recording layer 5 respectively under the crystalline state and the amorphous state of the phase-change recording material layer 53 are shown in Table 1.

**[Table 1]**

| | Reflectance | Transmittance |
|---|---|---|
| Crystalline State | 12 % | 45 % |
| Amorphous State | 4 % | 64 % |

The crystallization accelerating layers 54 are dielectric material layers which are provided so as to come into contact with the phase-change recording material layer 53 to improve the crystallization speed of the phase-change recording material. The crystallization accelerating layers 54 are made of, for instance, Si₃N₄. The dielectric material layers 55 are made of, for instance, ZnS-SiO₂.

Table 2 shows the average light transmittance of the phase-change recording material layer 53 when the information signals are recorded in accordance with the groove recording system by using the laser beam having the wavelength of about 650 nm, and when the information signals are recorded by the land groove recording system for comparison in the layer structure of the first recording layer 5 shown in Fig. 5.

**[Table 2]**

| | Groove Recording | Land Groove Recording |
|---|---|---|
| Average Transmittance | 50 % | 55 % |

As shown in the Table 2, the average light transmittance of the phase-change recording material layer 53, that is, the first recording layer 5 after the information signals are recorded by the land groove recording system rises to 55% from the light transmittance of 45 %. The light transmission increases 1.22 times as high as the light transmittance of 45 % under the crystalline state in which the information signals are not recorded. On the other hand, the average light transmittance of the phase-change recording material layer 53, that is, the first recording layer 5 after the information signals are recorded by the groove recording system according to this embodiment increases only to 50 % even after recording. The light transmittance increases only 1.11 times as high as 45% under a state that the information signals are not recorded.

As described above, according to the present embodiment, the change and variation in light transmittance between before and after the information signals are recorded on the phase-change recording material layer 53 of the first recording layer 5 can be made small. Accordingly, the influence due to the change in light transmittance by recording the information signals on the first recording layer 5 upon the recording or reproducing of the information signals in the second recording layer 3 can be reduced.

The complex refractive index of the phase-change recording material layer 53 when the laser beam having the wavelength of around 650 nm is used is about (4.5-4.0i) under a crystalline state and (4.0-1.8i) under an amorphous state. Accordingly, the light transmittance as the first recording layer 5 is higher in the amorphous state than in the crystalline state. Therefore, when the laser beam having the wavelength of around 650 nm is used as recording and reproducing laser beam, either the guide grooves 51 or the lands 52 of the first recording layer 5 may be initialized as described above. Thus, in the phase-change recording material layer 53 of the first recording layer 5, the area of amorphous parts high in light transmittance is increased as much as possible to maintain the light transmittance of the first recording layer 5 to a high value. Accordingly, the information signals can be easily recorded and reproduced on the second recording layer 3 and the quantity of light returning from the second recording layer 3 can be enhanced. In other words, the apparent reflectance of the second recording layer 3 can be increased and signal characteristics, servo characteristics, etc. upon recording and reproducing the information signals on the second recording layer 3 can be improved.

As described above, for instance, when either the guide grooves 51 or the lands 52 of the phase-change recording material layer 53 are merely recorded instead of initializing the entire part of the phase-change recording material layer 53 to have crystalline areas, the ratio the crystalline areas to amorphous areas upon viewing the phase-change recording material layer 53 as a whole is substantially 1 : 1. Consequently, the light transmittance of the phase-change recording material layer 53 under a state that the information signals are not recorded is 54.5 %.

The average light transmittance of the phase-change recording material layer 53 after such an initialization is carried out and the information signals are recorded by the groove recording system is 59.3 %. The light transmittance can be suppressed to increase about 1.09 times as much as the light transmittance before recording the information signal. Since the above-described initialization allows the change or variation in light transmittance generated by recording the information signals on the first recording layer 5 to be made small, the influence thereof on the recording or reproducing of the information signals on the second recording layer 3 can be more reduced.

Fig. 6 shows an example of a layer structure of a first recording layer 5a when the laser beam having the wavelength of about 400 nm is used as recording and reproducing laser beam. The first recording layer 5a comprises a phase-change recording material layer 53a and dielectric material layers 55a. As the phase-change recording material layer 53a, a phase-change recording material having a eutectic composition and including, for instance, Sb and Te as main components is used. The reflectance and the light transmittance of the first recording layer 5a respectively under the crystalline state and the amorphous state of the phase-change recording material layer 53a are shown in Table 3.

**[Table 3]**

| | Reflectance | Transmittance |
|---|---|---|
| Crystalline State | 5 % | 58 % |
| Amorphous State | 13 % | 45 % |

As the material of the dielectric material layers 55a, for instance, ZnS-SiO₂ is used. Table 4 shows the average light transmittance of the first recording layer 5a when the information signals are recorded in accordance with the groove recording system by using the laser beam having the wavelength of about 400 nm, and when the information signals are recorded by the land groove recording system for comparison in the layer structure of the first recording layer 5a shown in Fig. 6.

**[Table 4]**

| | Groove Recording | Land Groove Recording |
|---|---|---|
| Average Transmittance | 55 % | 52 % |

As shown in the Table 4, the average light transmittance of the first recording layer 5a after the information signals are recorded by the land groove recording system is 52 %. Since the light transmittance of the first recording layer 5a under the crystalline state in which the information signals are not recorded is 58%, the light transmittance decreases to 0.9 times as low as the light transmittance before recording the information signals. On the other hand, the average light transmittance of the first recording layer 5a after the information signals are recorded by the groove recording system according to this embodiment decreases is 55 %. This average light transmittance decreases only to 0.95 times as low as the light transmittance of 58% under the state in which the information signals are not recorded.

As described above, according to the present embodiment, the change and variation in light transmittance generated by recording the information signals on the phase-change recording material layer 53a forming the first recording layer 5a can be made small. Accordingly, the influence due to the change in light transmittance generated by recording the information signals on the first recording layer 5a upon recording of the information signals or reproducing of the recorded information signals in the second recording layer 3 can be reduced.

The complex refractive index of the phase-change recording material layer 53a when the laser beam having the wavelength of around 400 nm is used is about (2.0-3.0i) under a crystalline state and (3.0-2.0i) under an amorphous state. Accordingly, the light transmittance of the first recording layer 5a is higher in the crystalline state than in the amorphous state.

Therefore, in this embodiment, when the laser beam has the wavelength of around 400 nm, the entire part of the phase-change recording material layer 53a of the first recording layer 5a is initialized as described above. Thus, the area of crystalline parts high in light transmittance is increased as much as possible to maintain the light transmittance of the first recording layer 5a to a high value. Accordingly, the information signals can be easily recorded and reproduced on the second recording layer 3 likewise the structure shown in Fig. 5. The apparent reflectance of the second recording layer 3 can be increased and signal characteristics, servo characteristics, etc. can be improved.

Although the present invention is described by way of the embodiment, the present invention is not limited to the above-described embodiment and a variety of modifications may be made. In the above-described embodiment, for instance, the examples that the phase-change recording material is used for the first recording layer 5 or the second recording layer 3 are described. Further, the present invention may be also applied to a case that an organic dye material composed of, for instance, cyanine dye, phthalocyanine dye, azo dye, etc. is employed.

When an organic dye material layer is used for the first recording layer 5, the laser beam as recording light is applied to the organic dye material layer. Thus, the organic dyes of the parts to which the laser beam is applied absorb the laser beam to generate heat. The organic dyes of the parts to which the laser beam is applied are modified under the heat. The parts in which the dyes are modified are different in light transmittance from other parts of the organic dye material layer so that recording marks are formed thereon. Accordingly, the light transmittance of the first recording layer 5 is different between before and after the information signals are recorded.

In a multi-layer optical disc that uses the organic dye material layer for a first recording layer 5, information signals are recorded on the organic dye material layer of the first recording layer 5. In this case, when the information signals are recorded not by the land groove recording system, but by the groove recording system, the ratio of the parts in which the organic dyes are modified in the organic dye material layer is decreased. Consequently, the change or variation in light transmittance generated by recording the information signals on the organic dye material layer of the first recording layer 5 can be decreased. Thus, the change or variation in light transmittance generated by recording the information signals on the first recording layer 5 can hardly affect the recording or reproducing of the information signals on a second recording layer 3.

In the above-described embodiment, the example that when the information signals are recorded on the first recording layer 5, the information signals are recorded only on the guide grooves 51 is described. However, it is to be understood that the information signals may be recorded only on the lands 52 to obtain the same effect.

Further, in the above-described embodiment, although the example that the information signals may be rewritten or written once on the second recording layer 3, the present invention may be applied to an example that the information is read only on the second recording layer 3.

### Industrial Applicability

As described above, according to the present invention, the information signals are recorded on the recording medium having multi-recording layers. At this time, the information signals are recorded on either the guide grooves or the areas between the guide grooves of the recording layer of the first recording layer and the second recording layer located near the light transmission protective layer. Thus, the influence on the recording or reproducing of the information signals on the second recording layer is suppressed.

## Claims

1. A method for a recording medium in which when an information signal is recorded on a recording medium including as layers, a light transmission protective layer, a first recording layer on which laser beam incident from the light transmission protective layer is scanned along first guide grooves, and a second recording layer on which laser beam incident from the light transmission protective layer is scanned along second guide grooves, the information signal is recorded on either the guide-grooves or areas between the guide grooves in the recording layer of the first recording layer and the second recording layer located near the light transmission protective layer.

2. The recording method for a recording medium according to claim 1, wherein at least the recording layer of the first recording layer and the second recording layer located near the light transmission protective layer is made of a phase-change type optical recording material.

3. The recording method for a recording medium according to claim 1, at least the recording layer of the first recording layer and the second recording layer located near the light transmission protective layer is made of an organic dye material.

4. A recording medium comprising:
a light transmission protective layer;
a first recording layer provided in one surface side of the light transmission protective layer so as to form a layer relative to the light transmission protective layer and irradiated with laser beam incident through the light transmission protective layer along first guide grooves; and
a second recording layer provided as a layer relative to the first recording layer and irradiated with the laser beam incident from the light transmission protective layer along second guide grooves; wherein an information signal is recorded on either the guide grooves or areas between the guide grooves of the recording layer of the first recording layer and the second recording layer located near the light transmission protective layer.

5. The recording medium according to claim 4, wherein the second recording layer is irradiated with the laser beam incident through the light transmission protective layer and passing through the first recording layer.

6. The recording medium according to claim 4, wherein at least the recording layer of the first recording layer and the second recording layer located near the light transmission protective layer is made of a phase-change type optical recording material.

7. The recording medium according to claim 4, wherein at least the recording layer of the first recording layer and the second recording layer located near the light transmission protective layer is made of an organic dye material.
